# EUROPEAN PATENT SPECIFICATION

(11) **EP 3 674 374 B1**
(45) Date of publication and mention of the grant of the patent: **08.01.2025**
(21) Application number: 18847473.8
(22) Date of filing: 23.08.2018
(51) Int. Cl.: C09D 183/04, C09D 7/40, C08J 7/04

(54) **COATING RESIN COMPOSITION AND COATING FILM COMPRISING CURED ARTICLE THEREOF AS COATING LAYER**
BESCHICHTUNGSHARZZUSAMMENSETZUNG UND BESCHICHTUNGSFILM MIT GEHÄRTETEM GEGENSTAND DARAUS ALS ÜBERZUGSSCHICHT
COMPOSITION DE RÉSINE DE REVÊTEMENT ET FILM DE REVÊTEMENT COMPRENANT SON ARTICLE DURCI COMME COUCHE DE REVÊTEMENT

(30) Priority: 24.08.2017 KR 20170107238; 22.08.2018 KR 20180098127
(43) Date of publication of application: 01.07.2020
(73) Proprietor: Kolon Industries, Inc., Seoul 07793 (KR)
(72) Inventor: KIM, Hang Geun, Seoul07793 (KR); LEE, Dong Hee, Seoul 07793 (KR); BACK, Sung Hoon, Seoul 07793 (KR); AHN, Byung Joon, Seoul 07793 (KR); AHN, Sang Hyun, Seoul 07793 (KR); YANG, Pil Rye, Seoul 07793 (KR)
(74) Representative: Ter Meer Steinmeister & Partner
(86) International application number: PCT/KR2018/009715
(87) International publication number: WO 2019/039881

(56) References cited:
- EP-A1- 1 167 406
- EP-A2- 1 038 907
- WO-A1-2016/146896
- WO-A1-2016/146896
- JP-A- 2000 119 525
- JP-A- 2001 316 625
- KR-A- 20070 119 073
- KR-A- 20080 035 218
- KR-A- 20080 035 218
- KR-B1- 0 177 181
- KR-B1- 101 470 858
- US-A1- 2011 201 719
- US-A1- 2015 378 258

## Description

### [Technical Field]

The present disclosure relates to a resin composition for coating and a coating film including a cured product thereof as a coating layer.

### [Background Art]

Transparent polymer films are widely used as core materials in the fields of optical, transparent and flexible displays, and in particular have come to replace glass in the display industry due to the light weight, ease of processing and flexibility thereof. However, since transparent polymer films have disadvantages of low surface hardness and abrasion resistance compared to glass, coating techniques for improving the abrasion resistance of polymer films arise as an important issue.

The materials used for polymer films broadly include organic materials, inorganic materials and hybrid organic-inorganic materials. Thereamong, organic materials have advantages of flexibility and moldability due to the inherent characteristics of organic substances, but have the disadvantage of low surface hardness, whereas inorganic materials have the advantages of high surface hardness and transparency, but have the disadvantages of poor flexibility and moldability. For this reason, hybrid organic-inorganic materials having the advantages of both materials are receiving attention at present, and active research thereon is underway. However, it is not possible at present to realize the advantages of both types of materials.

In addition, the most important requirements in order for surface-coated polymer films to be appropriate for use in optical applications are that coating agents should have excellent adhesivity to the films and should be free from curling and rainbow phenomena. Therefore, finding coating materials that are capable of exhibiting all of these advantages has arisen as a key issue for technological development.

There are several patent documents that disclose coating compositions relating to polymer films. For example, Korean Patent Laid-Open Publication No. 2010-0041992 discloses a high-hardness hard coating film composition including an ultraviolet-ray-curable polyurethane acrylate oligomer, and Korean Patent Laid-Open Publication No. 2011-0013891 discloses a vinyl oligosiloxane hybrid composition including a metal catalyst. The former case can minimize the curling phenomenon and prevent the rainbow phenomenon, which is caused by optical interference. The latter case is reported as a composition having an inorganic network structure that can accomplish a low shrinkage rate and excellent optical properties and heat resistance.

Meanwhile, International Patent Publication No. WO 2014-129768 discloses a high-hardness siloxane resin composition containing a cyclic epoxy group, a method for preparing the same, and an optical film including a cured product thereof. This patent suggests that the technical level of the hard coating has improved such that a high hardness of 9H is able to be achieved. However, despite achieving such a high-hardness coating, the patent entails concerns about weather resistance due to the use of a single monomer and a cationic initiator, which is also a great obstacle to processing in mass production, such as a roll-to-roll process, has a limitation in that curling occurs, which may cause problems associated with durability of a subsequently provided product, and is inapplicable to flexible displays due to the excessive hardness, and thus decreased flexibility, thereof.

As such, coating materials still have limitations in that drawbacks in terms of hardness and permeability are inevitable when highlighting the advantages of organic materials, and the drawback associated with flexibility cannot be completely overcome when highlighting the advantages of inorganic materials. In particular, organic materials are suitable for surface coating of polymer films due to the advantageous flexibility thereof. However, when the surface hardness of the coating layer is improved by forming a dense network between the molecules, increased shrinkage may result in curling and cracking, which causes the coating layer to peel off due to the deteriorated adhesivity. Therefore, for wider use of polymer films, there is urgent need for techniques capable of preventing deterioration in the flexibility of films due to the coating while increasing the surface hardness thereof. WO 2016/146896 A1 discloses a siloxane coating composition based on methyltriethoxysilane, methacryloxypropyl trimethoxysilane, and glycidoxypropyl trimethoxysilane. Its Example 19 also includes dimethyldimethoxysilane.

### [Disclosure]

### [Technical Problem]

Therefore, the present disclosure has been made in view of the above problems, and it is one object of the present disclosure to provide a resin composition for coating which has a surface hardness of at least 5H as well as excellent flexibility and curling property. It is another object of the present disclosure to provide a coating film including a cured product of the resin composition as a coating layer.

### [Technical Solution]

In accordance with a first aspect of the present disclosure to solve the technical problems, provided is a resin composition for coating comprising a siloxane resin obtained through a chemical bond of compounds comprising: an alkoxysilane represented by the following Formula 1; and at least one alkoxysilane selected from an alkoxysilane represented by the following Formula 2 and an alkoxysilane represented by the following Formula 3, as well as a diol represented by Formula 4 shown below:

<Formula 1> R¹ₙSi(OR²)₄₋ₙ

wherein R¹ is a C1-C3 linear, branched or cyclic alkylene group substituted with epoxy or acryl, R² is a C1-C8 linear, branched or cyclic alkyl group, and n is an integer of 1 to 3,

<Formula 2> R³Si(OR⁴)₃

wherein R³ and R⁴ each independently represent a C1 to C4 linear or branched alkyl group, and

<Formula 3> R⁵₂Si(OR⁶)₂

wherein R⁵ and R⁶ each independently represent a C1 to C4 linear or branched alkyl group.

In the first aspect, the at least one alkoxysilane selected from the alkoxysilane represented by Formula 2 and the alkoxysilane represented by Formula 3 may be present in a molar ratio (%) of 10 to 100 moles with respect to the total of 100 moles of the alkoxysilane represented by the following Formula 1.

In this case, the siloxane resin may be obtained through a chemical bond of compounds including both the alkoxysilane represented by Formula 2 and the alkoxysilane represented by Formula 3, and the molar ratio of the alkoxysilane represented by Formula 2 and the alkoxysilane represented by Formula 3 may be 1:0.1 to 1:10.

The siloxane resin is obtained through a chemical bond of compounds further including a diol represented by the following Formula 4:

[Formula 4] HO(CH₂)ₙOH

wherein n is an integer of 1 to 10.

In this case, the diol may be present in a molar ratio (%) of 10 to 150 moles with respect to the total of 100 moles of the alkoxysilane represented by Formula 1.

The alkoxysilane represented by Formula 1 may include at least one selected from 3-glycidoxypropyl trimethoxysilane, 3-glycidoxypropyl triethoxysilane, 3-glycidoxypropyl tripropoxysilane, 3-methacryloxypropyl trimethoxysilane, 3-methacryloxypropyl triethoxysilane, 3-acryloxypropyl trimethoxysilane, 3-acryloxypropyl triethoxysilane, 3-acryloxypropyl tripropoxysilane, 2-(3,4-epoxycyclohexyl)ethyltrimethoxysilane, 2-(3,4-epoxycyclohexyl)ethyltriethoxysilane and 2-(3,4-epoxycyclohexyl)ethyltripropoxysilane.

The siloxane resin according to the first aspect may have a weight average molecular weight of 1,000 to 10,000 and a molecular weight distribution of 1.2 to 2.7.

The resin composition for coating according to the first aspect may further include at least one additive selected from the group consisting of an organic solvent, a photoinitiator, a thermal initiator, an antioxidant, a leveling agent and a coating aid.

In accordance with a second aspect of the present disclosure, there is provided a coating film including a base film and a coating layer formed on at least one surface of the base film using the resin composition for coating according to the first aspect.

In this case, the coating film according to the second aspect may have a surface hardness in the direction in which the coating layer is formed, measured in accordance with ASTM D3363, of 5H or more.

In addition, the coating film according to the second aspect may have a distance (curl) from a bottom to an edge of the film, of 10 mm or less and a radius of curvature, measured using a radial mode of a bending tester (JIRBT-620-2), of 5.0 mm or less, based on a coating thickness of 10 to 50 µm, which means that the coating film has an excellent curling property and flexibility.

### [Advantageous Effects]

The present disclosure is capable of ensuring surface hardness and scratch resistance through the dense crosslinking of a siloxane network formed from an alkoxysilane containing epoxy or acryl, and is capable of securing flexibility of the molecular bond and thus curling property and flexibility during curing by introducing dialkoxysilane having a silane D structure and trialkoxysilane having a silane T structure.

### [Best Mode]

In one aspect, the present disclosure is directed to a resin composition for coating including a siloxane resin obtained by a chemical bond of compounds including alkoxysilane containing epoxy or acryl and trialkoxysilane having a silane T structure and dialkoxysilane having a silane D structure.

More specifically, the alkoxysilane containing epoxy or acryl may be represented by the following Formula 1, and more preferably includes at least one selected from 3-glycidoxypropyl trimethoxysilane, 3-glycidoxypropyl triethoxysilane, 3-glycidoxypropyl tripropoxysilane, 3-methacryloxypropyl trimethoxysilane, 3-methacryloxypropyl triethoxysilane, 3-acryloxypropyl trimethoxysilane, 3-acryloxypropyl triethoxysilane, 3-acryloxypropyl tripropoxysilane, 2-(3,4-epoxycyclohexyl)ethyltrimethoxysilane, 2-(3,4-epoxycyclohexyl)ethyltriethoxysilane and 2-(3,4-epoxycyclohexyl)ethyltripropoxysilane.

<Formula 1> R¹ₙSi(OR²)₄₋ₙ

wherein R¹ is a C1-C3 linear, branched or cyclic alkylene group substituted with epoxy or acryl, R² is a C1-C8 linear, branched or cyclic alkyl group, and n is an integer of 1 to 3.

When the siloxane resin is synthesized using the silane compound alone, high surface hardness can be secured, but there is a limitation on securing flexibility, since the bonding structure is formed only through dense siloxane crosslinking. Accordingly, by polymerizing a siloxane resin from compounds including at least one alkoxysilane selected from alkoxysilane represented by the following Formula 2 and alkoxysilane represented by the following Formula 3 as well as the alkoxysilane represented by Formula 1, the present disclosure is capable of securing flexibility of the molecular bond and thus imparting excellent flexibility to the cured product of the resin composition.

<Formula 2> R³Si(OR⁴)₃

wherein R³ and R⁴ each independently represent a C1 to C4 linear or branched alkyl group.

<Formula 3> R⁵₂Si(OR⁶)₂

wherein R⁵ and R⁶ each independently represent a C1 to C4 linear or branched alkyl group.

That is, Formulas 2 and 3 show a trialkoxysilane having a silane T structure and a dialkoxysilane having a silane D structure, respectively, and contain an alkyl group that does not correspond to the polymerization functional group of the silane, thus securing the intermolecular space and thereby improving flexibility and curling properties.

The at least one alkoxysilane selected from the alkoxysilane represented by Formula 2 and the alkoxysilane represented by Formula 3 in the present disclosure is present in a molar ratio (%) of 10 to 100 moles, preferably 40 to 60 moles, based on the total of 100 moles of the alkoxysilane represented by Formula 1, because high surface hardness can be secured and flexibility can be improved. When the molar ratio is lower than the predetermined range, the surface hardness of the cured product may be further increased due to the increased content of the alkoxysilane represented by Formula 1, but flexibility may be deteriorated. When the molar ratio exceeds the predetermined range, a certain level of surface hardness may be not obtained due to excessive flexibility.

In this case, in order to improve the bending property while maintaining a hardness of 5H or more, in the present disclosure, the siloxane resin may be advantageously obtained by a chemical bond of compounds including both the alkoxysilane represented by Formula 2 and the alkoxysilane represented by Formula 3.

The molar ratio of the alkoxysilane represented by Formula 2 and the alkoxysilane represented by Formula 3 may be 1:0.1 to 1:10, preferably 1:0.5 to 1:10, and more preferably 1:0.5 to 1:5, because hardness can be maintained. When the molar ratio of the silane compound represented by Formula 3 is less than the predetermined range, the bending property may be poor compared to when the molar ratio of the silane compound represented by Formula 3 falls within the predetermined range.

Meanwhile, in the present disclosure, in order to improve flexibility, a diol represented by the following Formula 4 is incorporated in the polymerization of the siloxane resin. Through adding the diol, a linear diol structure is introduced into the polymer chain of the siloxane resin, so that the flexibility of the cured product can be further improved.

[Formula 4] HO(CH₂)ₙOH

wherein n is an integer of 1 to 10.

In the present disclosure, the diol may be present in a molar ratio (%) of 10 to 150 moles, preferably 10 to 100 moles, and more preferably 50 to 80 moles with respect to the total of 100 moles of the alkoxysilane. When the molar ratio of the diol exceeds the predetermined range, the polymerization rate may be slowed down due to the problem of the diol residue, and conversely, when the molar ratio does not reach the predetermined range, the addition of the diol may be meaningless due to the small increase in flexibility.

In the present disclosure, the synthesis of the siloxane resin may be carried out at room temperature, but may alternatively be carried out while performing stirring at 50 to 120°C for 1 to 120 hours. The catalyst for conducting the reaction may be an acid catalyst such as hydrochloric acid, acetic acid, hydrogen fluoride, nitric acid, sulfuric acid or iodic acid, a base catalyst such as ammonia, potassium hydroxide, sodium hydroxide, barium hydroxide or imidazole, and an ion exchange resin such as Amberite. These catalysts may be used alone or in combination. In this case, the amount of the catalyst may be about 0.0001 parts to about 10 parts by weight, based on 100 parts by weight of the siloxane resin, but is not particularly limited thereto. When the reaction is conducted, water or alcohol is produced as a byproduct. When removing this water or alcohol, the reverse reaction can be suppressed and the forward reaction can be performed more quickly, so that control of the reaction rate is possible through this principle. After completion of the reaction, the byproduct can be removed by heating under reduced pressure.

The siloxane resin of the present disclosure thus synthesized may have a weight average molecular weight of 1,000 to 10,000 and a polydispersion index (PDI) of 1.2 to 2.7. The molecular weight (Mw) and polydispersion index (PDI) correspond to the weight average molecular weight (Mw) and the number average molecular weight (Mn) determined for polystyrene through gel permeation chromatography (GPC, Waters Alliance, Model: e2695). The polymer to be measured was dissolved at a concentration of 1% in tetrahydrofuran and was injected in an amount of 20 µl into GPC. The mobile phase of GPC was tetrahydrofuran and was fed at a flow rate of 1.0 mL/min, and analysis was conducted at 30°C. The column used herein was purchased from Waters Styragel HR3, and two columns were connected in series. The detector herein used was an RI detector (Waters Alliance, 2414) and measurement was conducted at 40°C. At this time, the molecular weight distribution (PDI) was calculated by dividing the measured weight average molecular weight by the number average molecular weight.

Meanwhile, in addition to the siloxane resin, the resin composition for coating may further include, as another component, at least one additive selected from the group consisting of an organic solvent, a photoinitiator, a thermal initiator, an antioxidant, a leveling agent and a coating aid. In this case, it is possible to provide a resin composition for coating suitable for various applications by controlling the kind and content of the additive that is used. In the present disclosure, a resin composition for coating capable of exhibiting improved hardness, abrasion resistance, flexibility and curling resistance is preferably provided.

The initiator according to the present disclosure is, for example, a photopolymerization initiator such as an organometallic salt and a photopolymerization initiator such as amine and imidazole. In this case, the amount of the initiator that is added is preferably about 0.01 to 10 parts by weight based on 100 parts by weight of the total amount of the siloxane resin. When the content of the initiator is less than 0.01 parts by weight, the curing time of the coating layer required to obtain sufficient hardness is lengthened and efficiency is thus deteriorated. When the content of the initiator is more than 10 parts by weight, the yellowness of the coating layer may be increased, thus making it difficult to obtain a transparent coating layer.

Also, the organic solvent may include, but is not limited to, at least one selected from the group consisting of: ketones such as acetone, methyl ethyl ketone, methyl butyl ketone and cyclohexanone; cellosolves such as methyl cellosolve and butyl cellosolve; ethers such as ethyl ether and dioxane; alcohols such as isobutyl alcohol, isopropyl alcohol, butanol and methanol; halogenated hydrocarbons such as dichloromethane, chloroform and trichloroethylene; and hydrocarbons such as normal hexane, benzene and toluene. In particular, since the viscosity of the siloxane resin can be controlled by controlling the amount of the organic solvent that is added, the amount of the organic solvent can be suitably controlled in order to further improve workability or to control the thickness of the coating film.

Further, the present disclosure may provide a cured product having high hardness obtained by forming the resin composition for coating using a method such as coating, casting or molding, followed by photopolymerization or thermal polymerization. In particular, the present disclosure is directed to a coating film including a base film and a coating layer laminated on at least one surface of the base film and including a cured product of the resin composition for coating as a coating layer.

The coating film may have a surface hardness in the direction in which the coating layer is formed, measured in accordance with ASTM D3363, of at least 5H, the coating film may have a distance (curl) from the bottom to the edge of the film, of 10 mm or less, based on a coating thickness of 10 to 50 µm, and the coating film may have a radius of curvature, measured using a radial mode of a bending tester (JIRBT-620-2), of 5.0 mm or less, based on a coating thickness of 10 to 50 pm. This means that the resin composition has sufficient hardness as well as excellent curl characteristics and flexibility. Particularly, because various desirable conditions are satisfied, hardness of 5H or more can be secured, and the curl and the radius of curvature may be 5 mm or less and 2.5 mm or less, respectively, based on a coating thickness of 10 um, which means that physical properties can be further improved.

In the present disclosure, when the resin composition for coating is polymerized, the amount of light suitable for photopolymerization may be not less than 50 mJ/cm² and not more than 20,000 mJ/cm², and heat treatment may be performed at a temperature not lower than 40°C and not higher than about 300°C so as to obtain a uniform surface. The temperature suitable for photopolymerization is not lower than 40°C and not higher than 300°C, but is not limited thereto.

### [Mode for Invention]

Hereinafter, the present disclosure will be described in more detail with reference to the following Examples. The examples are only provided only for better understanding of the present disclosure, and should not be construed as limiting the scope of the present disclosure.

Among the compounds used in Examples and Comparative Examples of the present disclosure, KBM-403 is an alkoxysilane represented by Formula 1 of R¹ₙSi(OR²)₄₋ₙ, wherein R¹ is a glycidoxypropylene group, R² is a methyl group, and n is 1, and KBM-503 is an alkoxysilane represented by Formula 1 of R¹ₙSi(OR²)₄₋ₙ wherein R¹ is a methylacryloxypropylene group, R² is a methyl group, and n is 1.

In addition, TEMS (methyltrimethoxysilane) is an alkoxysilane represented by Formula 2 of R³Si(OR⁴)₃ wherein R³ is a methyl group and R⁴ is an ethyl group, and DMDMMS (dimethoxydimethylsilane) is an alkoxysilane represented by Formula 3 of R⁵₂Si(OR⁶)₂ wherein R⁵ is a methyl group and R⁶ is a methyl group. In addition, TEOS (tetraethoxysilane) used in comparative examples is an alkoxysilane represented by the formula Si(OR⁸)₄ wherein R⁸ is an ethyl group.

### Example 1 (reference)

KBM-403 (Shin-Etsu Chemical Co., Ltd.), TEMS (Sigma-Aldrich Corporation) and distilled water were mixed at a ratio of 414 g : 134 g : 67 g (1.75 mol : 0.75 mol : 3.75 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 4,527, a weight average molecular weight of 6,280, and a polydispersity index (PDI, Mw/Mn) of 1.38.

Next, 3 parts by weight of IRGACURE 250 (BASF Corporation), which is a photoinitiator, with respect to 100 parts by weight of the siloxane resin, was added to the siloxane resin diluted in the solvent to finally obtain a resin composition for coating.

This composition was coated on the polyimide surface using a bar, dried at 80°C for 20 minutes and then exposed to an ultraviolet lamp having a wavelength of 315 nm for 30 seconds to prepare a coating film with a thickness of 10 pm.

### Example 2 (reference)

KBM-403 (Shin-Etsu Chemical Co., Ltd.), DMDMS (Sigma-Aldrich Corporation) and distilled water were mixed at a ratio of 414 g : 90 g : 60 g (1.75 mol : 0.75 mol : 3.375 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 3,216, a weight average molecular weight of 5,325, and a polydispersity index (PDI, Mw/Mn) of 1.65. Next, a resin composition for coating was prepared in the same manner as in Example 1, and a polyimide film was coated therewith to prepare a coating film with a thickness of 10 pm.

### Example 3 (reference)

KBM-403 (Shin-Etsu Chemical Co., Ltd.), TEMS (Sigma-Aldrich Corporation) and distilled water were mixed at a ratio of 537 g : 41.4 g : 67.5 g (2.27 mol : 0.23 mol : 3.75 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 5,897, a weight average molecular weight of 8,721, and a polydispersity index (PDI, Mw/Mn) of 1.47. Next, a resin composition for coating was prepared in the same manner as in Example 1 and a polyimide film was coated therewith to prepare a coating film with a thickness of 10 pm.

### Example 4 (reference)

KBM-503 (Shin-Etsu Chemical Co., Ltd.), TEMS (Sigma-Aldrich Corporation) and distilled water were mixed at a ratio of 435 g : 134 g : 67 g (1.75 mol : 0.75 mol : 3.75 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 4,383, a weight average molecular weight of 6,671, and a polydispersity index (PDI, Mw/Mn) of 1.52. Next, a resin composition for coating was prepared in the same manner as in Example 1, and a polyimide film was coated therewith to prepare a coating film with a thickness of 10 pm.

### Example 5 (reference)

KBM-503 (Shin-Etsu Chemical Co., Ltd.), DMDMS (Sigma-Aldrich Corporation) and distilled water were mixed at a ratio of 435 g : 90 g : 61 g (1.75 mol : 0.75 mol : 3.375 mol), the resulting mixture was injected into a 1,000 mL double-jacket reactor, and a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 3,317, a weight average molecular weight of 5,681, and a polydispersity index (PDI, Mw/Mn) of 1.71. Next, a resin composition for coating was prepared in the same manner as in Example 1, and a polyimide film was coated therewith to prepare a coating film with a thickness of 10 pm.

### Example 6

KBM-403 (Shin-Etsu Chemical Co., Ltd.), TEMS (Sigma-Aldrich Corporation), ethylene glycol (Sigma-Aldrich Corporation) and distilled water were mixed at a ratio of 414 g : 134 g : 116 g : 34 g (1.75 mol : 0.75 mol : 1.875 mol : 1.875 mol), the resulting mixture was injected into a 1,000 mL double-jacket reactor, and a sodium hydroxide solution (NaOH 0.1 g in H₂O 1g) was added as a catalyst and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 um Teflon filter to obtain a siloxane resin. The molecular weight of the resin was measured using GPC, and the result showed that the resin had a number average molecular weight of 1,139, a weight average molecular weight of 2,131, and a polydispersity index (PDI, Mw/Mn) of 1.87. Next, a resin composition for coating was prepared in the same manner as in Example 1, and a polyimide film was coated therewith to prepare a coating film with a thickness of 10 pm.

### Example 7

KBM-403 (Shin-Etsu Chemical Co., Ltd.), DMDMS (Sigma-Aldrich Corporation), ethylene glycol (Sigma-Aldrich Corporation) and distilled water were mixed at a ratio of 414 g : 90 g : 104 g : 30g (1.75 mol : 0.75 mol : 1.688 mol : 1.688 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 um Teflon filter to obtain a siloxane resin. The molecular weight of the resin was measured using GPC, and the result showed that the resin had a number average molecular weight of 1,039, a weight average molecular weight of 1,721, and a polydispersity index (PDI, Mw/Mn) of 1.65. Next, a resin composition for coating was prepared in the same manner as in Example 1, and a polyimide film was coated therewith to prepare a coating film with a thickness of 10 pm.

### Example 8

KBM-503 (Shin-Etsu Chemical Co., Ltd.), TEMS (Sigma-Aldrich Corporation), ethylene glycol (Sigma-Aldrich Corporation) and distilled water were mixed at a ratio of 435 g : 134 g : 116 g : 34 g (1.75 mol : 0.75 mol : 1.875 mol : 1.875 mol), the resulting mixture was injected into a 1,000 mL double-jacket reactor, a sodium hydroxide solution (NaOH 0.1 g in H₂O 1g) was added as a catalyst and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 um Teflon filter to obtain a siloxane resin. The molecular weight of the resin was measured using GPC, and the result showed that the resin had a number average molecular weight of 1,213, a weight average molecular weight of 2,407, and a polydispersity index (PDI, Mw/Mn) of 1.98. Next, a resin composition for coating was prepared in the same manner as in Example 1, and a polyimide film was coated therewith to prepare a coating film with a thickness of 10 pm.

### Example 9

KBM-503 (Shin-Etsu Chemical Co., Ltd.), DMDMS (Sigma-Aldrich Corporation), ethylene glycol (Sigma-Aldrich Corporation) and distilled water were mixed at a ratio of 435 g : 90 g : 104 g : 30 g (1.75 mol : 0.75 mol : 1.688 mol : 1.688 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 um Teflon filter to obtain a siloxane resin. The molecular weight of the resin was measured using GPC, and the result showed that the resin had a number average molecular weight of 1,079, a weight average molecular weight of 2,016, and a polydispersity index (PDI, Mw/Mn) of 1.86. Next, a resin composition for coating was prepared in the same manner as in Example 1, and a polyimide film was coated therewith to prepare a coating film with a thickness of 10 µm.

### Example 10 (reference)

KBM-403 (Shin-Etsu Chemical Co., Ltd.), TEMS (Sigma-Aldrich Corporation), DMDMS (Sigma-Aldrich Corporation) and distilled water were mixed at a ratio of 414 g : 67 g : 45 g : 64 g (1.75 mol : 0.375 mol : 0.375 mol : 3.56 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 um Teflon filter to obtain a siloxane resin. The molecular weight of the resin was measured using GPC, and the result showed that the resin had a number average molecular weight of 3,863, a weight average molecular weight of 6,528, and a polydispersity index (PDI, Mw/Mn) of 1.69. Next, a resin composition for coating was prepared in the same manner as in Example 1, and a polyimide film was coated therewith to prepare a coating film with a thickness of 10 µm.

### Example 11 (reference)

KBM-403 (Shin-Etsu Chemical Co., Ltd.), TEMS (Sigma-Aldrich Corporation), DMDMS (Sigma-Aldrich Corporation), and distilled water were mixed at a ratio of 414 g : 89 g : 30 g : 65 g (1.75 mol : 0.5 mol : 0.25 mol : 3.625 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 um Teflon filter to obtain a siloxane resin. The molecular weight of the resin was measured using GPC, and the result showed that the resin had a number average molecular weight of 4,174, a weight average molecular weight of 7,054, and a polydispersity index (PDI, Mw/Mn) of 1.69. Next, a resin composition for coating was prepared in the same manner as in Example 1, and a polyimide film was coated therewith to prepare a coating film with a thickness of 10 pm.

### Example 12

KBM-403 (Shin-Etsu Chemical Co., Ltd.), TEMS (Sigma-Aldrich Corporation), DMDMS (Sigma-Aldrich Corporation), ethylene glycol (Sigma-Aldrich Corporation) and distilled water were mixed at a ratio of 414 g : 67 g : 45 g : 110 g: 32 g (1.75 mol : 0.375 mol : 0.375 mol : 1.78 mol : 1.78 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 1,119, a weight average molecular weight of 1,835, and a polydispersity index (PDI, Mw/Mn) of 1.64. Next, a resin composition for coating was prepared in the same manner as in Example 1, and a polyimide film was coated therewith to prepare a coating film with a thickness of 10 pm.

### Example 13 (reference)

The process was performed in the same manner as in Example 11, except that KBM-403 (Shin-Etsu Chemical Co., Ltd.), TEMS (Sigma-Aldrich Corporation), DMDMS (Sigma-Aldrich Corporation) and distilled water were mixed at a ratio of 414 g : 12 g : 82 g : 61 g (1.75 mol : 0.068 mol : 0.682 mol : 3.409 mol).

### Example 14

The process was performed in the same manner as in Example 9, except that KBM-503 (Shin-Etsu Chemical Co., Ltd.), DMDMS (Sigma-Aldrich Corporation), ethylene glycol (Sigma-Aldrich Corporation) and distilled water were mixed at a ratio of 435 g : 90 g : 10.8 g : 57.6 g (1.75 mol : 0.75 mol : 0.175 mol : 3.2 mol).

### Comparative Example 1

KBM-403 (Shin-Etsu Chemical Co., Ltd.) and distilled water were mixed at a ratio of 591 g : 67.5 g (2.50 mol : 3.75 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 5,136, a weight average molecular weight of 16,486, and a polydispersity index (PDI, Mw/Mn) of 3.21. Next, a resin composition for coating was prepared in the same manner as in Example 1, and a polyimide film was coated therewith to prepare a coating film with a thickness of 10 pm.

### Comparative Example 2

KBM-503 (Shin-Etsu Chemical Co., Ltd.) and distilled water were mixed at a ratio of 621 g : 67.5 g (2.50 mol : 3.75 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 4,927, a weight average molecular weight of 16,456, and a polydispersity index (PDI, Mw/Mn) of 3.34. Next, a resin composition for coating was prepared in the same manner as in Example 1, and a polyimide film was coated therewith to prepare a coating film with a thickness of 10 pm.

### Comparative Example 3

KBM-403 (Shin-Etsu Chemical Co., Ltd.), TEOS (Sigma-Aldrich Corporation) and distilled water were mixed at a ratio of 414 g : 156 g : 74 g (1.75 mol : 0.75 mol : 4.125 mol), the resulting mixture was injected into a 1,000 mL double-jacket reactor, a sodium hydroxide solution (NaOH 0.1 g in H₂O 1g) was added as a catalyst, and the mixture was stirred at 200 RPM with a mechanical stirrer at 90°C for 8 hours using a thermostat. Then, the resulting mixture was diluted with 2-butanone to realize a solid content of 50 wt%, and was then filtered through a 0.45 µm Teflon filter to obtain a siloxane resin. The molecular weight of the resin was measured using GPC, and the result showed that the resin had a number average molecular weight of 3,339, a weight average molecular weight of 21,370, and a polydispersity index (PDI, Mw/Mn) of 6.4. Next, a resin composition for coating was prepared in the same manner as in Example 1, and a polyimide film was coated therewith to prepare a coating film with a thickness of 10 pm.

### <Measurement Example>

The physical properties of the prepared coating films of Examples and Comparative examples were evaluated in accordance with the following methods, and the results are shown in Table 1 below.
(1) Surface hardness: pencil hardness was measured at a rate of 180 mm/min under a load of 1 kgf in accordance with ASTM D3363 using a pencil hardness tester manufactured by IMOTO (Japan).
(2) Curl: when a sample was cut into a square having a size of 100 mm × 100 mm and placed on a flat plane, the maximum distance from the bottom to the edge was measured.
(3) Scratch resistance: A film cut into a rectangle 20 cm × 5 cm in size was fixed using an adhesive tape (3M) such that a coating surface faced upwards, and whether or not scratching occurred was observed when a rod wrapped with #0000 (LIBERON) nonwoven fabric was reciprocated on the flat plane 10 times at 45 rpm under a load of 1.5 kgf. The case where scratching occurred was determined to be "NG", and the case where no scratching occurred was determined to be "good".
(4) Bending property (bendability): the final films prepared in accordance with Examples and Comparative Examples were cut into rectangles having a size of 50 mm × 100 mm. Silver was deposited to about 100 nm on the upper surface of the coating layer to form a silver nano thin film, the point at which conductivity was lost was detected while simultaneously monitoring conductivity and decreasing the radius of curvature of the final films by 0.1R from 20R (R = mm) using a radial mode of a bending tester (JIRBT-620-2, Juniltech), and the detected point was taken as "bending property (crack)".
(5) Transmittance and haze: The final films produced in accordance with Examples and Comparative Examples were cut into squares having a size of 50 mm × 50 mm, and the transmittance and haze thereof were measured five times in accordance with ASTM D1003 using a haze meter (Model: HM-150) manufactured by MURAKAMI Co., and the average of the five values was calculated.

**[Table 1]**

| | Surface hardness | Curl (mm) | Scratch resistance | Bending property (R) | Transmittance (%) | Haze (%) |
|---|---|---|---|---|---|---|
| Ex. 1 | 5H | 0 | Good | 1.9 | 91.5 | 1.0 |
| Ex. 2 | 5H | 0 | Good | 1.5 | 91.5 | 1.0 |
| Ex. 3 | 5H | 0 | Good | 3.0 | 91.5 | 1.0 |
| Ex. 4 | 5H | 5 | Good | 2.2 | 91.5 | 1.0 |
| Ex. 5 | 5H | 3 | Good | 2.0 | 91.5 | 1.0 |
| Ex. 6 | 5H | 0 | Good | 1.3 | 91.5 | 1.0 |
| Ex. 7 | 5H | 0 | Good | 1.2 | 91.5 | 1.0 |
| Ex. 8 | 5H | 5 | Good | 1.6 | 91.5 | 1.0 |
| Ex. 9 | 5H | 5 | Good | 1.4 | 91.5 | 1.0 |
| Ex. 10 | 5H | 0 | Good | 1.7 | 91.5 | 1.0 |
| Ex. 11 | 5H | 0 | Good | 1.8 | 91.5 | 1.0 |
| Ex. 12 | 5H | 0 | Good | 1.1 | 91.5 | 1.0 |
| Ex. 13 | 5H | 0 | Good | 1.5 | 91.5 | 1.0 |
| Ex. 14 | 5H | 4 | Good | 1.8 | 91.5 | 1.0 |
| Comp. Ex. 1 | 4H | 50 | NG | 3.5 | 91.5 | 1.0 |
| Comp. Ex. 2 | 5H | 110 | Good | 5.1 | 91.5 | 1.0 |
| Comp. Ex. 3 | 5H | 90 | Good | 3.8 | 91.5 | 1.0 |

As can be seen from Table 1, Comparative Examples 1 to 3, in which an alkoxysilane having a T structure or an alkoxysilane having a D-structure is not used for the synthesis of a siloxane resin, have a radius of curvature (R) higher than 3.0 mm, thus exhibiting significantly lowered flexibility or considerably low curling properties compared to Examples 1 to 14.

In particular, when comparing Comparative Example 1 using KBM-403 including an epoxy reactive group with Example 3 using KBM-403 in the same amount, it can be seen that Example 3 containing an alkoxysilane having a D structure exhibits improved hardness, curling property, and bending property compared to Comparative Example 1.

In addition, when comparing Comparative Example 2 using KBM-503, containing an acrylic reactive group, with Examples 4, 5, 8, 9 and 14, containing an alkoxysilane or diol, it can be seen that Examples 4, 5, 8, 9 and 14 have better pencil hardness, curling property, scratch resistance and flexibility.

In addition, among Examples, Examples 2, 5, 7 and 9, containing an alkoxysilane having a D structure, have better flexibility than Examples 1, 4, 6 and 8, containing an alkoxysilane having a T structure.

In addition, among Examples, Examples 1, 2, 6 and 7 using KBM-403 containing an epoxy reactive group have better curl and bending properties than Examples 4, 5, 8 and 9 using KBM-503 containing an acrylic reactive group.

In addition, among Examples, Examples 6 to 9 and 12 containing a diol have a better bending property than Examples containing no diol.

As can be seen from Examples described above, the resin composition for coating according to the present disclosure is capable of securing flexibility of the molecular bond and thus maximizing curling property and flexibility during curing without deterioration in surface hardness by introducing dialkoxysilane, having a silane D structure, and trialkoxysilane, having a silane T structure, into the synthesis of the siloxane resin.

### [Industrial Applicability]

The present disclosure is applicable to a transparent polymer film that can be extensively utilized as a core material in the fields of optical, transparent and flexible displays.

## Claims

1. A resin composition for coating comprising a siloxane resin obtained through a chemical bond of compounds comprising:
an alkoxysilane represented by the following Formula 1;
at least one alkoxysilane selected from an alkoxysilane represented by the following Formula 2 and an alkoxysilane represented by the following Formula 3: and
a diol represented by the following Formula 4:
<Formula 1> R¹ₙSi(OR²)₄₋ₙ
wherein R¹ is a C1-C3 linear, branched or cyclic alkylene group substituted with epoxy or acryl, R² is a C1-C8 linear, branched or cyclic alkyl group, and n is an integer of 1 to 3,
<Formula 2> R³Si(OR⁴)₃
wherein R³ and R⁴ each independently represent a C1 to C4 linear or branched alkyl group,
<Formula 3> R⁵₂Si(OR⁶)₂
wherein R⁵ and R⁶ each independently represent a C1 to C4 linear or branched alkyl group, and
[Formula 4] HO(CH₂)ₙOH
wherein n is an integer of 1 to 10.

2. The resin composition for coating according to claim 1, wherein the at least one alkoxysilane selected from the alkoxysilane represented by Formula 2 and the alkoxysilane represented by Formula 3 is present in a molar ratio (%) of 10 to 100 moles with respect to a total of 100 moles of the alkoxysilane represented by Formula 1.

3. The resin composition for coating according to claim 1, wherein the siloxane resin is obtained through a chemical bond of compounds comprising both the alkoxysilane represented by Formula 2 and the alkoxysilane represented by Formula 3.

4. The resin composition for coating according to claim 3, wherein the molar ratio of the alkoxysilane represented by Formula 2 and the alkoxysilane represented by Formula 3 is 1:0.1 to 1:10.

5. The resin composition for coating according to claim 1, wherein the diol is present in a molar ratio (%) of 10 to 150 moles with respect to a total of 100 moles of the alkoxysilane represented by Formula 1.

6. The resin composition for coating according to claim 1, wherein the alkoxysilane represented by Formula 1 comprises at least one selected from 3-glycidoxypropyl trimethoxysilane, 3-glycidoxypropyl triethoxysilane, 3-glycidoxypropyl tripropoxysilane, 3-methacryloxypropyl trimethoxysilane, 3-methacryloxypropyl triethoxysilane, 3-acryloxypropyl trimethoxysilane, 3-acryloxypropyl triethoxysilane, 3-acryloxypropyl tripropoxysilane, 2-(3,4-epoxycyclohexyl)ethyltrimethoxysilane, 2-(3,4-epoxycyclohexyl)ethyltriethoxysilane and 2-(3,4-epoxycyclohexyl)ethyltripropoxysilane.

7. The resin composition for coating according to claim 1, wherein the siloxane resin has a weight average molecular weight of 1,000 to 10,000 and a molecular weight distribution of 1.2 to 2.7, both determined in accordance with the methods indicated in the description.

8. The resin composition for coating according to claim 1, further comprising least one additive selected from the group consisting of an organic solvent, a photoinitiator, a thermal initiator, an antioxidant, a leveling agent and a coating aid.

9. A coating film comprising:
a base film; and
a coating layer laminated on at least one surface of the base film and comprising a cured product of the resin composition for coating according to any one of claims 1 to 8.

10. The coating film according to claim 9, wherein the coating film has a surface hardness in a direction in which the coating layer is formed, measured in accordance with ASTM D3363, of 5H or more.

11. The coating film according to claim 9, wherein the coating film has a distance (curl) from a bottom to an edge of the film of 10 mm or less, based on a coating thickness of 10 to 50 µm, determined in accordance with the method indicated in the description.

12. The coating film according to claim 9, wherein the coating film has a radius of curvature, measured using a radial mode of a bending tester (JIRBT-620-2), of 5.0 mm or less, based on a coating thickness of 10 to 50 µm.

## Patentansprüche

1. Harzzusammensetzung zum Beschichten, umfassend ein Siloxanharz, das durch eine chemische Bindung von Verbindungen erhalten wird, die umfassen:
ein Alkoxysilan, dargestellt durch die folgende Formel 1;
mindestens ein Alkoxysilan, ausgewählt aus einem Alkoxysilan, dargestellt durch die folgende Formel 2, und einem Alkoxysilan, dargestellt durch die folgende Formel 3: und
einem Diol, dargestellt durch die folgende Formel 4:
<Formel 1> R¹ₙSi(OR²)₄₋ₙ
worin R¹ eine lineare, verzweigte oder cyclische C1-C3-Alkylengruppe ist, die mit Epoxid oder Acryl substituiert ist,
R² eine lineare, verzweigte oder cyclische C1-C8-Alkylgruppe ist und n eine ganze Zahl von 1 bis 3 ist,
<Formel 2> R³Si(OR⁴)₃
worin R³ und R⁴ jeweils unabhängig voneinander eine lineare oder verzweigte C1- bis C4-Alkylgruppe darstellen,
<Formel 3> R⁵₂Si(OR⁶)₂
worin R⁵ und R⁶ jeweils unabhängig voneinander eine lineare oder verzweigte C1- bis C4-Alkylgruppe darstellen, und
[Formel 4] HO(CH₂)ₙOH
worin n eine ganze Zahl von 1 bis 10 ist.

2. Harzzusammensetzung zum Beschichten nach Anspruch 1, wobei das mindestens eine Alkoxysilan, das aus dem durch die Formel 2 dargestellten Alkoxysilan und dem durch die Formel 3 dargestellten Alkoxysilan ausgewählt ist, in einem Molverhältnis (%) von 10 bis 100 Mol, bezogen auf insgesamt 100 Mol des durch die Formel 1 dargestellten Alkoxysilans vorhanden ist.

3. Harzzusammensetzung zum Beschichten nach Anspruch 1, wobei das Siloxanharz durch eine chemische Bindung von Verbindungen erhalten wird, die sowohl das durch die Formel 2 dargestellte Alkoxysilan, als auch das durch die Formel 3 dargestellte Alkoxysilan umfassen.

4. Harzzusammensetzung zum Beschichten nach Anspruch 3, wobei das Molverhältnis des durch die Formel 2 dargestellten Alkoxysilans und des durch die Formel 3 dargestellten Alkoxysilans 1:0,1 bis 1: 10 beträgt.

5. Harzzusammensetzung zum Beschichten nach Anspruch 1, wobei das Diol in einem Molverhältnis (%) von 10 bis 150 Mol, bezogen auf insgesamt 100 Mol des durch die Formel 1 dargestellten Alkoxysilans vorhanden ist.

6. Harzzusammensetzung zum Beschichten nach Anspruch 1, wobei das durch die Formel 1 dargestellte Alkoxysilan mindestens eines, ausgewählt aus 3-Glycidoxypropyltrimethoxysilan, 3-Glycidoxypropyltriethoxysilan, 3-Glycidoxypropyltripropoxysilan, 3-Methacryloxypropyltrimethoxysilan, 3-Methacryloxypropyltriethoxysilan, 3-Acryloxypropyltrimethoxysilan, 3-Acryloxypropyltriethoxysilan, 3-Acryloxypropyltripropoxysilan, 2-(3,4-Epoxycyclohexyl)ethyltrimethoxysilan, 2-(3,4-Epoxycyclohexyl)ethyltriethoxysilan und 2-(3,4-Epoxycyclohexyl)ethyltripropoxysilan, umfasst.

7. Harzzusammensetzung zum Beschichten nach Anspruch 1, wobei das Siloxanharz ein gewichtsmittleres Molekulargewicht von 1.000 bis 10.000 und eine Molekulargewichtsverteilung von 1,2 bis 2,7 aufweist, wobei beides gemäß den in der Beschreibung angegebenen Verfahren bestimmt wird.

8. Harzzusammensetzung zum Beschichten nach Anspruch 1, ferner umfassend mindestens ein Additiv, ausgewählt aus der Gruppe bestehend aus einem organischen Lösungsmittel, einem Photoinitiator, einem thermischen Initiator, einem Antioxidans, einem Verlaufsmittel und einem Beschichtungshilfsmittel.

9. Beschichtungsfilm, umfassend:
einen Basisfilm; und
eine Beschichtungsschicht, die auf mindestens eine Oberfläche des Basisfilms laminiert ist und ein gehärtetes Produkt der Harzzusammensetzung zum Beschichten nach einem der Ansprüche 1 bis 8 enthält.

10. Beschichtungsfilm nach Anspruch 9, wobei der Beschichtungsfilm eine Oberflächenhärte in einer Richtung, in der die Beschichtungsschicht gebildet wird, gemessen gemäß ASTM D3363, von 5H oder mehr aufweist.

11. Beschichtungsfilm nach Anspruch 9, wobei der Beschichtungsfilm einen Abstand (Wellung) von der Unterseite bis zur Kante des Films von 10 mm oder weniger aufweist, basierend auf einer Beschichtungsdicke von 10 bis 50 µm, gemessen gemäß dem in der Beschreibung angegebenen Verfahren.

12. Beschichtungsfilm nach Anspruch 9, wobei der Beschichtungsfilm einen Krümmungsradius, gemessen unter Verwendung eines Radialmodus eines Biegeprüfgeräts (JIRBT-620-2), von 5,0 mm oder weniger aufweist, basierend auf einer Beschichtungsdicke von 10 bis 50 µm.

## Revendications

1. Composition de résine pour revêtement comportant une résine de siloxane obtenue par une liaison chimique de composés comportant :
un alcoxysilane représenté par la Formule 1 suivante ;
au moins un alcoxysilane choisi parmi un alcoxysilane représenté par la Formule 2 suivante et un alcoxysilane représenté par la Formule 3 suivante ; et
un diol représenté par la Formule 4 suivante :
<Formule 1> R¹ₙSi(OR²)₄₋ₙ
dans laquelle R¹ est un groupe alkylène en C₁ à C₃ linéaire, ramifié ou cyclique substitué par un époxy ou un acryle, R² est un groupe alkyle en C₁ à C₈ linéaire, ramifié ou cyclique, et n est un entier de 1 à 3,
<Formule 2> R³Si(OR⁴)₃
dans laquelle R³ et R⁴ représentent chacun, indépendamment l'un de l'autre, un groupe alkyle en C₁ à C₄ linéaire ou ramifié,
<Formule 3> R⁵₂Si(OR⁶)₂
dans laquelle R⁵ et R⁶ représentent chacun, indépendamment l'un de l'autre, un groupe alkyle en C₁ à C₄ linéaire ou ramifié, et
[Formule 4] HO(CH₂)ₙOH
dans laquelle n est un entier de 1 à 10.

2. Composition de résine pour revêtement selon la revendication 1, dans laquelle le au moins un alcoxysilane choisi parmi l'alcoxysilane représenté par la Formule 2 et l'alcoxysilane représenté par la Formule 3 est présent dans un rapport molaire (%) de 10 à 100 moles par rapport à un total de 100 moles de l'alcoxysilane représenté par la Formule 1.

3. Composition de résine pour revêtement selon la revendication 1, dans laquelle la résine de siloxane est obtenue par une liaison chimique de composés comportant à la fois l'alcoxysilane représenté par la Formule 2 et l'alcoxysilane représenté par la Formule 3.

4. Composition de résine pour revêtement selon la revendication 3, dans laquelle le rapport molaire de l'alcoxysilane représenté par la Formule 2 et de l'alcoxysilane représenté par la Formule 3 est de 1:0,1 à 1:10.

5. Composition de résine pour revêtement selon la revendication 1, dans laquelle le diol est présent dans un rapport molaire (%) de 10 à 150 moles par rapport à un total de 100 moles de l'alcoxysilane représenté par la Formule 1.

6. Composition de résine pour revêtement selon la revendication 1, dans laquelle l'alcoxysilane représenté par la Formule 1 comporte au moins un élément choisi parmi triméthoxysilane de 3-glycidoxypropyle, triéthoxysilane de 3-glycidoxypropyle, tripropoxysilane de 3-glycidoxypropyle, triméthoxysilane de 3-méthacryloxypropyle, triéthoxysilane de 3-méthacryloxypropyle, triméthoxysilane de 3-acryloxypropyle, triéthoxysilane de 3-acryloxypropyle, tripropoxysilane de 3-acryloxypropyle, 2-(3,4-époxycyclohexyl)éthyltriméthoxysilane, 2-(3,4-époxycyclohexyl)éthyltriéthoxysilane et 2-(3,4-époxycyclohexyl)éthyltripropoxysilane.

7. Composition de résine pour revêtement selon la revendication 1, dans laquelle la résine de siloxane a une masse moléculaire moyenne en masse de 1 000 à 10 000 et une répartition de masse moléculaire de 1,2 à 2,7, toutes deux déterminées conformément aux procédés indiqués dans la description.

8. Composition de résine pour revêtement selon la revendication 1, comportant en outre au moins un additif choisi parmi le groupe constitué d'un solvant organique, d'un photo-initiateur, d'un initiateur thermique, d'un anti-oxydant, d'un agent égalisant et d'une aide au revêtement.

9. Film de revêtement comportant :
un film de base ; et
une couche de revêtement stratifiée sur au moins une surface du film de base et comportant un produit durci de la composition de résine pour revêtement selon l'une quelconque des revendications 1 à 8.

10. Film de revêtement selon la revendication 9, dans lequel le film de revêtement présente une dureté superficielle dans une direction dans laquelle la couche de revêtement est formée, mesurée conformément à la norme ASTM D3363, de 5H ou plus.

11. Film de revêtement selon la revendication 9, dans lequel le film de revêtement a une distance (tuilage) depuis un dessous jusqu'à un bord du film, de 10 mm ou moins, sur la base d'une épaisseur de revêtement de 10 à 50 µm, déterminée conformément au procédé indiqué dans la description.

12. Film de revêtement selon la revendication 9, dans lequel le film de revêtement a un rayon de courbure, mesuré en utilisant un mode radial d'une machine d'essai de flexion (JIRBT-620-2), de 5,0 mm ou moins, sur la base d'une épaisseur de revêtement de 10 à 50 µm.
